(19) Europäisches Patentamt
European Patent Office
Office européen des brevets

(11) **EP 3 261 217 B1**

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **17175721.4**

(22) Anmeldetag: **13.06.2017**

(51) Internationale Patentklassifikation (IPC):
**H02K 1/27** (2022.01)  **H02K 1/30** (2006.01)
**H02K 7/00** (2006.01)  H02K 15/03 (2006.01)

(52) Gemeinsame Patentklassifikation (CPC):
**H02K 7/003; H02K 1/2733; H02K 1/278;**
**H02K 1/30;** H02K 15/03

(54) **ROTORSYSTEM FÜR EINE ELEKTRISCHE MASCHINE, ELEKTRISCHE MASCHINE MIT DEM ROTORSYSTEM UND HERSTELLUNGSVERFAHREN FÜR DAS ROTORSYSTEM**

ROTOR SYSTEM FOR AN ELECTRIC MACHINE, ELECTRICAL MACHINE COMPRISING THE ROTOR SYSTEM, AND A METHOD OF PRODUCING THE ROTOR SYSTEM

SYSTÈME DE ROTOR POUR UNE MACHINE ÉLECTRIQUE, MACHINE ÉLECTRIQUE COMPRENANT LE SYSTÈME DE ROTOR ET PROCÉDÉ DE FABRICATION DU SYSTÈME DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016 DE 102016211253**

(43) Veröffentlichungstag der Anmeldung:
**27.12.2017 Patentblatt 2017/52**

(73) Patentinhaber: **Robert Bosch GmbH**
**70442 Stuttgart (DE)**

(72) Erfinder:
• **Derhardt, Steffen**
**70839 Gerlingen (DE)**
• **Paweletz, Anton**
**70736 Fellbach (DE)**

(56) Entgegenhaltungen:
**EP-A1- 0 388 147**  **EP-A1- 2 072 826**
**WO-A1-2007/072536**  **WO-A1-2014/080087**
**US-A1- 2013 200 735**

**Beschreibung**

Die Erfindung betrifft ein Rotorsystem für eine elektrische Maschine, sowie eine elektrische Maschine mit einem solchen Rotorsystem und ein Herstellungsverfahren zum Herstellen des Rotorsystems der elektrischen Maschine.

Stand der Technik

Rotoren von Hochgeschwindigkeitsmaschinen beinhalten in der Regel hoch energetische Seltene-Erden Permanentmagnete. Solche Hochgeschwindigkeitsmaschinen werden typischerweise in einem Drehzahlbereich von mehr als hunderttausend Umdrehungen pro Minute angewendet.

Aus der US 4,433 261 A ist eine Synchronmaschine vom Permanentmagnettyp mit einem Rotor bekannt. Auf einer Rotorwelle sind dabei Seitenplatten aus einem nicht-magnetischen Material, wie Edelstahl, in einem derartigen Abstand durch Schweißen befestigt, dass säulenförmige Permanentmagnete derart dazwischen eingesetzt werden können, dass eine Verschiebung der Permanentmagnete in Umfangsrichtung verhindert wird. Die Magnete werden mit der Oberfläche der Welle und den Seitenplatten verklebt. Des Weiteren wird ein Harz in den Zwischenraum zwischen den Magneten eingespritzt. Anschließend wird der Außenumfang der so montierten Magnete mit Glasfasern oder Kohlefasern umwickelt.

Aus der WO14080087A1 ist ein Rotorsystem mit einem Magnetelement, einer zweigeteilten Welle mit einem ersten Wellenteil und einem zweiten Wellenteil bekannt, wobei wenigstens ein Wellenteil eine Magnetelement-Aufnahme zur Aufnahme des wenigstens einen Magnetelements und eine Wellenteil-Aufnahme aufweist zur Aufnahme zumindest eines Abschnitts des gegenüberliegenden anderen Wellenteils, wobei die beiden Wellenteile und das dazwischen angeordnete Magnetelement in axialer Richtung miteinander verspannt sind, wobei eine Symmetrieachse des Magnetelements auf einer Rotationsachse angeordnet ist.

Offenbarung der Erfindung

Die Erfindung offenbart ein Rotorsystem für eine elektrische Maschine mit den Merkmalen des Patentanspruchs 1, eine elektrische Maschine mit den Merkmalen des Patentanspruchs 11 und ein Verfahren zur Herstellung des Rotorsystems mit den Merkmalen des Patentanspruchs 13.

Vorteile der Erfindung

Die vorliegende Erfindung schafft ein Rotorsystem mit einer zweigeteilten Welle, bei welcher ein Magnetelement des Rotors direkt in einer Magnetelement-Aufnahme einer der Wellenteile aufgenommen wird. Des Weiteren sind die beiden Wellenteile dabei außerdem zusammensteckbar ausgebildet, so dass ein besonders kompakter, stabiler und preisgünstiger Aufbau erzielt werden kann. Des Weiteren kann die strukturelle Festigkeit und Steifigkeit bei einer möglichst maximalen aktiven Masse des wenigstens einen Magnetelements vergrößert werden. Somit kann eine maximal erreichbare Energiedichte bei einer elektrischen Maschine mit einem solchen Rotorsystem erzielt werden. Hierbei kann das Wellenteil mit seiner Magnetelement-Aufnahme, die durch das wenigstens ein Magnetelement erzeugten Fliehkräfte beim Drehen einer Welle, die mit dem Rotor verbunden ist, geeignet abfangen. Außerdem erlaubt das Zusammenstecken der beiden Wellenteile eine besonders einfache und schnelle Montage.

Bevorzugte Weiterbildungen sind Gegenstand der Unteransprüche.

Eine Verbindungsstange ist erfindungsgemäß durch die beiden Wellenteile hindurchgeführt zum Verbinden der beiden ineinander steckbaren Wellenteile, wobei das wenigstens eine Magnetelement in der Magnetelement-Aufnahme dabei auf die Verbindungsstange aufgeschoben oder um diese angeordnet ist. Die Verbindungsstange ist beispielsweise aus einem Material mit einer möglichst großen mechanischen Stabilität und einem möglichst niedrigen thermischen Ausdehnungskoeffizienten hergestellt, z.B. aus einem Faserverbundmaterial wie Kohlefasermaterial oder einem Kohlefaserverbundwerkstoff.

In einer Ausführungsform der Erfindung können mehrere Magnetelemente ein konisches Ende ausbilden. Ein derartiges konisches Ende kann beispielsweise kegelförmig oder kegelstumpfförmig ausgebildet sein.

Die Wellenteil-Aufnahme des Wellenteils kann als eine sich in Längsrichtung erstreckende Vertiefung ausgebildet sein, wobei die Wellenteil-Aufnahme denselben Innendurchmesser oder einen größeren Innendurchmesser als die Magnetelement-Aufnahme aufweist. Bei einem kleineren Innendurchmesser der Wellenteil-Aufnahme wird automatisch eine Nut als Magnetelement-Aufnahme erzeugt und bei einem gleichgroßen oder größeren Innendurchmesser der Wellenteil-Aufnahme das Einführen einer Magnetelementhülse ermöglicht, so dass keine segmentierte Bauweise erforderlich ist.

Das in der Wellenteil-Aufnahme aufzunehmende Wellenteil weist in einer Ausführungsform der Erfindung einen konstanten Außendurchmesser auf, welcher an den Innendurchmesser der Wellenteil-Aufnahme des anderen Wellenteils derart angepasst ist, um in die Wellenteil-Aufnahme eingeschoben zu werden. Diese Ausführung ist besonders kostengünstig zu realisieren. In einer weiteren erfindungsgemäßen Ausführungsform weist das in der Wellenteil-Aufnahme aufzunehmende Wellenteil einen abgestuften Außendurchmesser mit einem kleineren inneren Außendurchmesser und einem größeren äußeren Außendurchmesser auf. Das Wellenteil wird mit seinem kleineren inneren Außendurchmesser in der Wellenteil-Aufnahme des anderen Wellenteils aufgenommen und liegt mit seinem größeren äußeren Außendurchmesser entweder an dem gegenüberliegenden Wellenteil außen an und kann gegen dieses in axialer Richtung verspannt werden. Alternativ kann das Wellenteil stattdessen mit seinem kleineren inneren Durchmesser an dem Ende des wenigstens einen Magnetelements im Inneren der Magnetelement-Aufnahme anliegen oder an einer dazwischen angeordneten zusätzlichen Trägerplatte und gegen diese in axialer Richtung verspannt werden.

In einer erfindungsgemäßen Ausführungsform ist an der Innenumfangsfläche der Magnetelement-Aufnahme und/oder an der Außenumfangsfläche des wenigstens einen Magnetelements und/oder an der Innenumfangsfläche der Wellenteil-Aufnahme und/oder an der Außenumfangsfläche des einzuführenden Wellenteiles ein zumindest teilweise elastisches Ausgleichselement vorgesehen. Dieses hat den Vorteil, dass es beispielsweise Toleranzunterschiede ausgleichen und des Weiteren dämpfende Eigenschaften aufweist. Das Ausgleichselement ist in einer weiteren erfindungsgemäßen Ausführungsform beispielsweise eine Ausgleichsschicht, welche z.B. aus einem Harz besteht, welches nach dem Aushärten zumindest teilweise elastisch ist.

Zwischen wenigstens einem Ende des wenigstens einen Magnetelementes und dem dazu gegenüberliegenden Wellenteil ist in einer anderen Ausführungsform der Erfindung eine Trägerplatte vorgesehen. Die Trägerplatte bildet eine axiale Aufnahme für das wenigstens ein Magnetelement, wobei die Trägerplatte segmentiert oder als Scheibe mit einer Durchgangsbohrung ausgebildet ist, je nach Magnetelement-Aufnahme in welche die Trägerplatte beispielsweise einzusetzen ist.

Die wenigstens eine Trägerplatte ist in einer Ausführungsform der Erfindung aus einem nicht magnetischen Material oder einer nicht magnetischen Materialkombination hergestellt und beeinflusst daher nicht die magnetischen Größen des Motors

Zwischen wenigstens einem Ende des wenigstens einen Magnetelements und der Trägerplatte und/oder zwischen der Trägerplatte und dem gegenüberliegenden Wellenteil kann in einer weiteren Ausführungsform der Erfindung ebenfalls ein elastisches Ausgleichselement vorgesehen werden. Dadurch können sowohl Toleranzen ausgeglichen als auch eine dämpfende Wirkung in axialer Richtung bereitgestellt werden.

Kurze Beschreibung der Zeichnungen

Weitere Merkmale und Vorteile der vorliegenden Erfindung werden nachfolgend anhand der Figuren erläutert. Es zeigen:

Fig. 1    eine schematische Schnittansicht einer elektrischen Maschine mit einem Rotorsystem gemäß einem nicht zur Erfindung gehörenden Beispiel ("Beispiel" im Folgenden);

Fig. 2    eine schematische Schnittansicht einer elektrischen Maschine mit einem Rotorsystem gemäß einer erfindungsgemäßen Ausführungsform;

Fig. 3a    eine schematische Seitenansicht durch ein Ausführungsbeispiel eines Magnetelements des erfindungsgemäßen Rotorsystems;

Fig. 3b    eine schematische Schnittansicht des Magnetelements gemäß Fig. 3a;

Fig. 4a    eine schematische Seitenansicht durch ein Ausführungsbeispiel zweier Magnetelemente des erfindungsgemäßen Rotorsystems;

Fig. 4b    eine schematische Schnittansicht der Magnetelemente gemäß Fig. 4a;

Fig. 5    ein Flussdiagramm zur Herstellung der elektrischen Maschine gemäß der Fig. 1, 2, 3a, 3b, 4a und 4b.

Ausführungsformen der Erfindung

Die vorliegende Erfindung betritt die Struktur, die Konstruktion und ein Herstellungsverfahren eines Rotorsystems einer elektrischen Maschine, insbesondere Hochgeschwindigkeitsmaschine, die in einem variablen Betriebszyklus betrieben werden kann und hohen Temperaturschwankungen ausgesetzt sein kann. Die Rotoren solcher elektrischen Maschinen bestehen in der Regel aus hoch energetischen Permanentmagneten aus seltenen Erden.

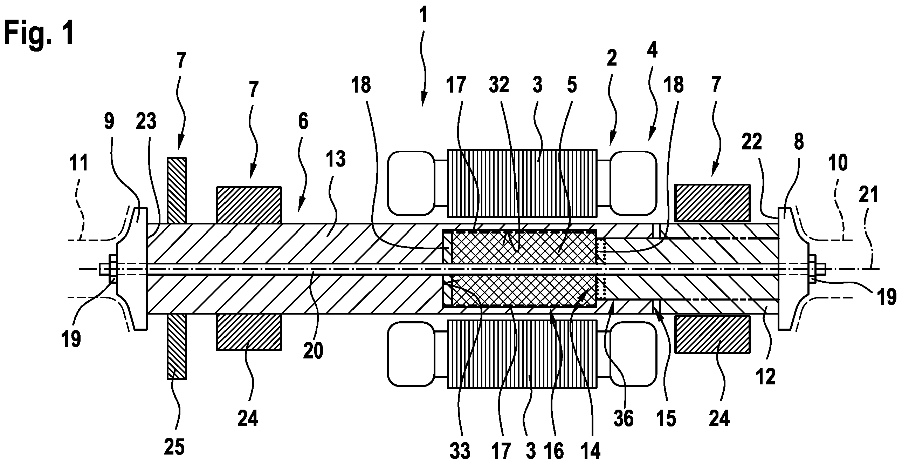

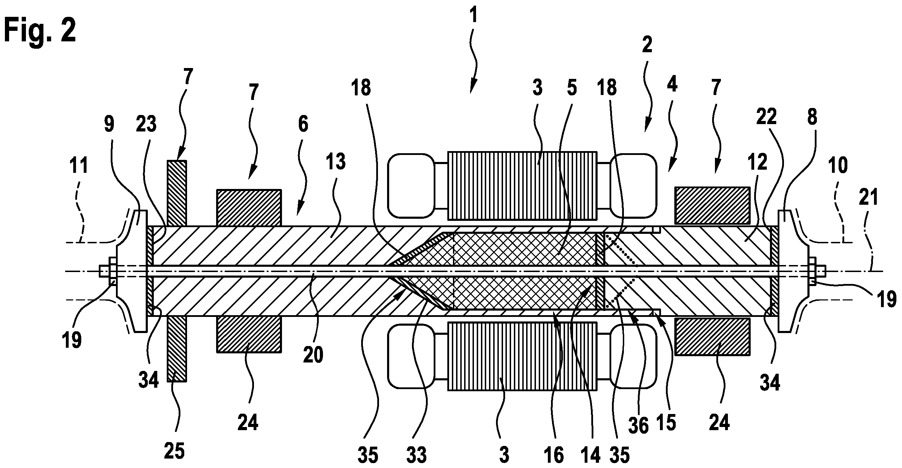

In den Fig. 1 und 2 ist eine Grundanordnung einer elektrischen Maschine 1, z.B. einer Hochgeschwindigkeitsmaschine gezeigt, welche im Nachfolgenden noch erläutert wird. Fig. 1 zeigt ein besagtes Beispiel.

Die Fig. 1 und 2 zeigen zunächst die Grundanordnung von elektromagnetischen, aktiven Komponenten der beispielhaften elektrischen Maschine 1, wie dem Stator 2 mit Wicklungen 3, dem Rotor 4 mit Magnetelementen 5, die Welle 6 und die Lagerelemente 7 des Rotors 4. Die Darstellung in den Fig. 1 und 2 ist dabei rein schematisch, stark vereinfacht und nicht maßstäblich.

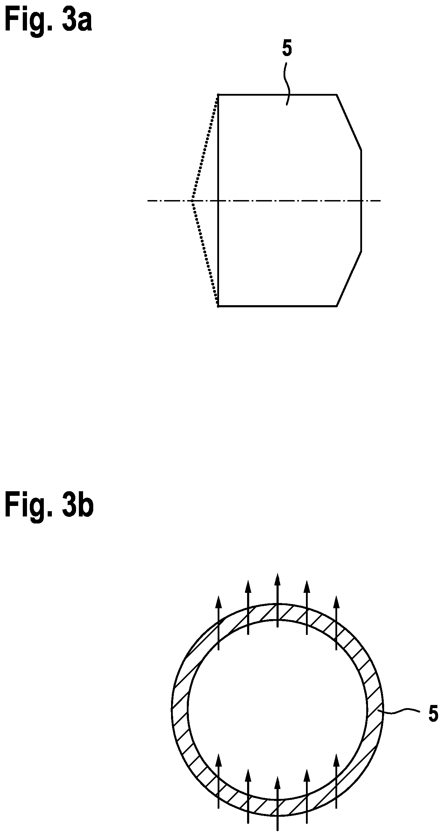

Die Maschine 1 mit dem erfindungsgemäßen Rotorsystem bildet in dem in der Fig. 2 gezeigten Ausführungsbeispiel z.B. den Antrieb eines zweistufigen Kompressors oder Verdichters. Der Rotor 4 des erfindungsgemäßen Rotorsystems ist aber weder auf Hochgeschwindigkeitsmaschinen oder Kompressoren bzw. Verdichter noch auf die speziellen Ausführungsformen der elektrischen Maschine in Fig. 2 sowie nachfolgenden Fig. 3a, 3b, 4a, 4b und 5 beschränkt, sondern kann bei jeder elektrischen Maschine eingesetzt werden, welche geeignet ist mit dem Rotorsystem ausgerüstet zu werden. Das erfindungsgemäße Rotorsystem weist unter anderem den Rotor 4 und die zweigeteilte Welle 6 auf.

Die Laufräder 8 und 9 von beiden Verdichterstufen der elektrischen Maschine 1 sind auf gegenüberliegenden Seiten des Motors angeordnet. Ihre Gegenstücke, die Gehäuse 10, 11 oder Voluten sind in den Fig. 1 und 2 lediglich mit einer gestrichelten Linie angedeutet.

Wie in Fig. 2 gezeigt ist, weist das erfindungsgemäße Rotorsystem den Rotor 4 und die zweiteilige Welle 6 oder zweiteilige Motorwelle mit einem ersten Wellenteil 12 und einem zweiten Wellenteil 13 auf. Die beiden ersten und zweiten Wellenteile 12 und 13 sind auf einer gemeinsamen Verbindungsstange 20 angeordnet, deren Längsachse gleichzeitig auch die Rotationsachse 21 der Welle 6 und ihrer Wellenteile 12, 13 und des dazwischen angeordneten Rotors 4 bildet. An dem jeweiligen äußeren Ende 22, 23 des ersten und zweiten Wellenteils 12 bzw. 13 ist in dem in Fig. 2 gezeigten Ausführungsbeispiel jeweils das Laufrad oder sog. Impeller 8 bzw. 9 angeordnet.

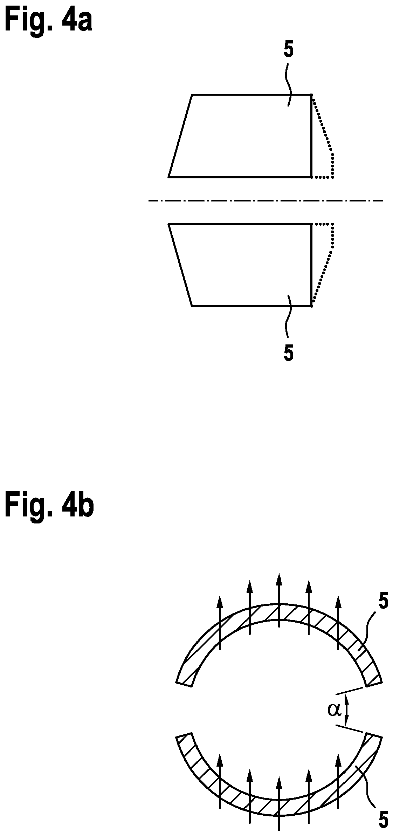

Zur Ausbildung des Rotorsystems mit dem Rotor 4 für eine elektrische Maschine 1, wie sie in den Fig. 1 und 2 beispielhaft gezeigt ist, sind zwischen den beiden inneren Enden 14, 15 der Wellenteile 12 und 13 ein oder mehrere Magnetelemente 5 um die Verbindungsstange 20 angeordnet. Beispielsweise können bei einer segmentierten Bauweise ein oder mehrere Magnetelemente als Stäbe oder Magnetstäbe radial um die Verbindungsstange 20 angeordnet werden, wie in Fig. 1 und nachfolgenden Fig. 4a und 4b angedeutet ist. Zusätzlich oder alternativ kann auch wenigstens eine Magnethülse als Magnetelement 5 auf der Verbindungsstange 20 angeordnet werden, wie in Fig. 2 und den nachfolgenden Fig. 3a und 3b angedeutet ist. Im Falle von mehreren Magnethülsen als Magnetelementen 5 können diese in axialer Richtung hintereinander auf der Verbindungsstange 20 angeordnet werden. Die Magnetelemente 5 des erfindungsgemäßen Rotorsystems sind dabei insbesondere Permanentmagnete, beispielsweise Permanentmagnete aus seltenen Erden.

Wie in Fig. 2 gezeigt ist, sind die beiden Wellenteile 12, 13 der zweigeteilten Welle 6 des erfindungsgemäßen Rotorsystems der elektrischen Maschine 1 zusammensteckbar ausgebildet.

Ein Wellenteil, hier z.B. das zweite Wellenteil 13 in den Fig. 1 und 2, weist an seinem inneren Ende 15 als Magnetelement-Aufnahme 16 eine sich in Längsrichtung erstreckende Vertiefung auf, zur Aufnahme des jeweiligen Magnetelements 5, sowie gegebenenfalls zusätzlich wenigstens einer nachfolgend beschriebenen optionalen Trägerplatte 18.

Die Magnetelement-Aufnahme 16 des Wellenteiles 13 zur Aufnahme des jeweiligen Magnetelements 5 ist dabei als eine konische Vertiefung, wie in Fig. 2 gezeigt, ausgebildet. In dem in Fig. 1 gezeigten Beispiel ist die Magnetelement-Aufnahme beispielsweise als Nut 32 oder nutförmige Vertiefung ausgebildet. In diesem Fall ist eine segmentierte Bauweise der Magnetelementanordnung sowie gegebenenfalls einer in der Nut 32 aufgenommenen Trägerplatte 18 erforderlich, wie in den nachfolgenden Fig. 4a und 4b beispielhaft für zwei Magnetelementstäbe als Magnetelemente dargestellt ist, um ein jeweiliges Magnetelement 5 der Magnetelementanordnung und gegebenenfalls eine segmentiert ausgeführte Trägerplatte mit ihren Trägerplattensegmenten in der Nut 32 zu montieren.

Ebenso kann, wie in dem Ausführungsbeispiel in Fig. 2 gezeigt ist, die Magnetelement-Aufnahme 16 des Wellenteils 13 zur Aufnahme des jeweiligen Magnetelements auch als eine sich in Längsrichtung erstreckende Vertiefung, z.B. eine Vertiefung mit einem zylindrischen Querschnitt, ausgebildet sein. Je nach Form des in der Vertiefung aufgenommenen Endes des jeweiligen Magnetelements 5 kann die Vertiefung einen ebenen oder flachen Boden aufweisen, wie in Fig. 1 und mit einer gestrichelten Linie in Fig. 2 angedeutet ist. Das jeweilige Magnetelement 5 und gegebenenfalls eine zwischen dem Magnetelement 5 und dem Boden der Magnetelement-Aufnahme 16 angeordneten Trägerplatte 18 sind dabei beispielsweise ebenfalls mit flachen Enden bzw. als flache Scheibe oder flaches Scheibensegment ausgebildet, so dass sie an dem Boden der Magnetelement-Aufnahme 16 flächig aufliegen.

Im Falle eines nach außen hervortretenden spitzen oder stumpfen Endes des jeweiligen Magnetelements 5, z.B. der Magnetelementhülse in Fig. 2 und den nachfolgenden Fig. 3a und 3b, oder des gemeinsamen aus den Magnetelementen 5 gebildeten nach außen hervortretenden spitzen oder stumpfen Endes, wie in den nachfolgenden Fig. 4a und 4b angedeutet ist, ist die Vertiefung der Magnetelement-Aufnahme 16 und ihr Boden 33 korrespondierend zu dem nach außen hervortretenden spitzen oder stumpfen Ende des Magnetelements 5 bzw. des gemeinsamen nach außen hervortretenden spitzen oder stumpfen Endes der Magnetelemente 5 ausgebildet. Dem entsprechend ist der Boden 33 der Vertiefung als nach innen spitz oder stumpf zulaufend, insbesondere kegelförmig oder kegelstumpfförmig ausgebildet, wie in dem Ausführungsbeispiel in Fig. 2 gezeigt ist. Der Boden 33 der Vertiefung bildet somit eine Aufnahme 35 für das nach außen hervortretende spitze oder stumpfe Ende des oder der Magnetelemente 5.

Wenn außerdem eine Trägerplatte 18 zwischen dem Boden der Magnetelement-Aufnahme 16 und dem jeweiligen Magnetelement 5 vorgesehen ist, gilt gleiches wie für das jeweilige Magnetelement 5. Die Trägerplatte 18 ist dann statt als flache Scheibe oder aus flachen Scheibensegmenten zusammengesetzte Trägerplatte 18, wie in Fig. 1 gezeigt, als konische, insbesondere kegelförmige oder kegelstumpfförmige, Trägerplatte 18 ausgebildet, wie in Fig. 2 gezeigt ist, oder aus Trägerplattensegmenten zu einer konischen, insbesondere kegelförmigen oder kegelstumpfförmigen, Trägerplatte 18 zusammengesetzt, um in der Magnetelement-Aufnahme 16 aufgenommen zu werden und des Weiteren das jeweilige Magnetelement 5 mit seinem Ende aufzunehmen.

Umgekehrt kann das andere Wellenteil 12 ebenfalls einen flachen Boden aufweisen, wenn das andere Ende des jeweiligen Magnetelements 5 flach ausgebildet ist, wie in dem Ausführungsbeispiel in Fig. 2 gezeigt ist. Im Falle einer zwischen dem jeweiligen Magnetelement 5 und dem anderen, hier z.B. ersten Wellenteil 12, angeordneten zusätzlichen Trägerplatte 18, kann diese ebenfalls als flache Scheibe ausgebildet sein, wie in den Ausführungsbeispielen in Fig. 2 angedeutet ist, oder als Trägerplattensegmente, wenn die Trägerplatte 18 in der als Nut 32 ausgebildeten Magnetelement-Aufnahme 16 in Fig. 1 eingesetzt werden soll.

In einem weiteren Ausführungsbeispiel kann das andere Wellenteil, z.B. das erste Wellenteil 12, wie mit einer gepunkteten Linie in Fig. 2 angedeutet ist, ebenfalls eine Aufnahme zur Aufnahme eines nach außen hervortretenden oder zeigenden spitzen oder stumpfen Endes des oder der Magnetelemente 5 aufweisen. Dem entsprechend ist die Aufnahme nach innen spitz oder stumpf zulaufend, insbesondere kegelförmig oder kegelstumpfförmig ausgebildet.

Gleiches gilt, wenn eine zweite Trägerplatte 18 zwischen dem ersten Wellenteil 12 und dem jeweiligen Magnetelement 5 vorgesehen ist. Die Trägerplatte 18 ist dabei statt als flache Scheibe, wie in Fig. 2, als konische, insbesondere kegelförmige oder kegelstumpfförmige, Trägerplatte 18 ausgebildet, um in der entsprechend geformten Aufnahme des ersten Wellenteils 12 aufgenommen zu werden und des Weiteren das jeweilige Magnetelement 5 mit seinem entsprechenden nach außen hervortretenden oder zeigenden spitzen oder stumpfen Ende aufzunehmen. Die konische, insbesondere kegelförmige oder kegelstumpfförmige, Trägerplatte 18 kann auch aus mehreren Trägerplattensegmenten zusammengesetzt werden, wie in Fig. 1, um in einer Nut 32 als Magnetelement-Aufnahme 16 eingesetzt werden zu können, wie in Fig. 1 für das zweite Wellenteil 13 und dessen Magnetelement-Aufnahme 16 gezeigt ist.

Durch das nach außen hervortretende oder zeigende spitz oder stumpf ausgebildete Ende des Magnetelements 5 in Fig. 2 bzw. das gemeinsame durch die Magnetelemente 5 ausgebildete nach außen hervortretenden oder zeigende spitze oder stumpfe Ende in Fig. 1 und entsprechend die Ausbildung der Aufnahme in dem zugeordneten Wellenteil 12, 13 für das Ende des bzw. der Magnetelemente 5 als konische Vertiefung und einer optionalen dazwischen angeordneten entsprechend angepassten Trägerplatte 18, wie in Fig. 2, können die im Betrieb bei der Rotation des Rotors entstehenden Fliehkräfte besser kompensiert werden.

Die Fliehkraft des jeweiligen Magnetelements 5 wirkt dabei in radialer Richtung nach außen auf das Wellenteil und seine Magnetelement-Aufnahme 16. Durch die spezielle Kopplung von nach außen hervortretendem oder zeigendem spitzen oder stumpfen Ende des Magnetelements 5 bzw. der Magnetelemente 5 und einer zugeordneten konischen Vertiefung des gegenüberliegenden Wellenteils 12, 13 bzw. einer gegebenenfalls dazwischen geschalteten Trägerplatte 18, kann eine Kraftkomponente in axialer Richtung und eine Kraftkomponente in radialer Richtung entgegen der Fliehkraft erzeugt werden. Dadurch können im Betrieb auftretende Fliehkräfte teilweise kompensiert werden bzw. diesen Fliehkräften entgegengewirkt werden.

Die Ausbildung des ersten Wellenteils 12 mit seinem inneren Ende 14 wird weiter unten noch näher beschrieben.

Außen um das zweite Wellenteil 13 mit seiner Magnetelement-Aufnahme 16 ist der Stator 2 mit seinen Statorwicklungen 3 angeordnet. In dem Fall, dass das Ende des jeweiligen Magnetelements 5 auch in einer Aufnahme des anderen Wellenteils, hier z.B. ersten Wellenteils 12, aufgenommen ist, kann der Stator mit seinen Statorwicklungen auch zusätzlich über der Aufnahme des anderen bzw. ersten Wellenteils 12 angeordnet werden.

Wahlweise zusätzlich kann, wie in Fig. 1 mit einer gestrichelten Linie angedeutet ist, ein elastisches Ausgleichselement 17 zwischen der Innenseite oder dem Innenumfang der Magnetelement-Aufnahme 16 des zweiten Wellenteils 13 und der Außenseite oder dem Außenumfang des jeweiligen Magnetelementes 5 vorgesehen sein. Außerdem kann zwischen dem jeweiligen inneren Ende 14, 15 des jeweiligen Wellenteiles 12, 13 und dem Ende des Magnetelements 5 bzw. dem gemeinsamen Ende der Magnetelemente ein derartiges Ausgleichselement 17 vorgesehen sein. Falls eine Trägerplatte 18 zwischen dem Ende des Magnetelements 5 bzw. dem gemeinsamen Ende der Magnetelemente 5 und dem inneren Ende 14, 15 des Wellenteils 12, 13 vorgesehen ist, kann ein derartiges elastisches Ausgleichselement auch zwischen dem Ende des Magnetelements bzw. der Magnetelement und der Trägerplatte sowie zwischen der Trägerplatte und dem inneren Ende des Wellenteils 12, 13 vorgesehen werden.

Das elastische Ausgleichselement 17 ist beispielsweise wenigstens eine elastische Ausgleichs- oder Verbindungsschicht. Das Material des Ausgleichselements 17 bzw. der in Fig. 1 gezeigten Ausgleichs- oder Verbindungsschicht ist vorzugsweise elektrisch nicht leitend. Als Material für das Ausgleichselement 17 kann beispielsweise ein Harz verwendet werden, wobei das Harz vorzugsweise in ausgehärtetem Zustand zumindest teilweise elastisch ist. Die Erfindung ist jedoch auf ein Harz als Material für das Ausgleichselement 17 nicht beschränkt. Es kann jedes andere Material oder jede andere Materialkombination vorgesehen werden, die geeignet ist die Magnetelemente 5 und das wenigstens eine Wellenteil 12, 13 der elektrischen Maschine 1 sowie gegebenenfalls die wenigstens eine Trägerplatte 18 zu verbinden.

Die Ausgleichs- oder Verbindungsschicht weist elastische und dämpfende Eigenschaften auf. Des Weiteren sorgt die Ausgleichs- oder Verbindungsschicht als eine mechanische Ausgleichs- oder Verbindungsschicht für einen gleichmäßigen Kräfteausgleich bzw. für eine gleichmäßige Verteilung der Vorspannkraft der Magnetelement-Aufnahme 16 auf das jeweilige Magnetelement 5 in radialer Richtung, um die durch das jeweilige Magnetelement 5 erzeugte Fliehkraft beim Drehen der Welle 6 abzufangen. Die Ausgleichs- oder Verbindungsschicht kann bei der Montage beispielsweise in einem halbflüssigen Zustand auf der Innenseite oder Innenumfang der jeweiligen Magnetelement-Aufnahme 16 und/oder der Außenseite der Magnetelemente 5 und gegebenenfalls der Außenseite einer vorhandenen Trägerplatte 18 aufgebracht und anschließend thermisch behandelt werden, um auszuhärten. Gleiches gilt für die Ausgleichs- oder Verbindungsschicht zwischen dem Ende des Magnetelements 5 bzw. gemeinsamen Ende der Magnetelement 5 und der gegenüberliegenden Trägerplatte sowie für die Ausgleichs- oder Verbindungsschicht zwischen der Trägerplatte und dem gegenüberliegenden inneren Ende des Wellenteils 12, 13.

Die Wiedererweichungstemperatur des Materials der Ausgleichs- oder Verbindungsschicht ist dabei ausreichend hoch und insbesondere ausreichend höher als die maximale Betriebstemperatur insbesondere der Magnetelemente 5 und des jeweiligen Wellenteils 12, 13 und seiner Magnetelement-Aufnahme 16, so dass die Ausgleichs- oder Verbindungsschicht im Betrieb der elektrischen Maschine 1 nicht ungewollt weich wird.

Das Vorsehen der Ausgleichs- oder Verbindungsschicht hat den Vorteil, dass sie auch einen Toleranzausgleich zwischen den hochtolerierten metallischen Elementen, hier insbesondere den Wellenteilen 12 und 13 und den Magnetelementen 5, sowie einer gegebenenfalls vorhandenen Trägerplatte 18 erlaubt, bei deren Fertigung entweder keine genauen Toleranzen möglich sind oder die Nachfolgeprozesse, wie z.B. Schleifen usw., sehr teuer oder unter Umständen sogar gesundheitsschädlich sind. Dies kann beispielsweise bei Magnetelementen 5 der Fall sein, welche auf Neodymium - Seltene-Erden basieren. Die Fliehkräfte der Magnetelemente 5 können durch das Ausgleichselement 17, z.B. die in Fig. 1 gezeigte Ausgleichs- oder Verbindungsschicht, in einem breiten Betriebsbereich der Drehzahl und der Temperatur neutralisiert bzw. geeignet kompensiert werden.

Des Weiteren kann wahlweise zusätzlich, wie zuvor beschrieben, eine Trägerplatte 18 zwischen dem jeweiligen inneren Enden 14, 15 des Wellenteils 12 bzw. 13 und dem gegenüberliegenden Ende des jeweiligen Magnetelements 5 vorgesehen werden. Die Trägerplatten 18 werden dabei auf die Verbindungsstange 20 aufgeschoben. Die Trägerplatten 18 an beiden Enden der Magnetelemente 5 dienen dabei als axiale Aufnahmen für die Magnetelemente 5. Wie zuvor beschrieben kann aber auch nur an einem Ende des jeweiligen Magnetelements eine Trägerplatte oder gar keine Trägerplatte vorgesehen werden, je nach Funktion und Einsatzzweck.

In dem in Fig. 1 gezeigten Beispiel, ist wie zuvor beschrieben, die Magnetelement-Aufnahme 16 des zweiten Wellenteils 13 als Nut 32 ausgebildet, so dass eine segmentierte Bauweise der Magnetelement-Anordnung sowie gegebenenfalls in der Nut 32 aufgenommenen Trägerplatte(n) 18 erforderlich ist. Im Falle einer solchen segmentierten Bauweise der Magnetelemente 5, bei welcher beispielsweise wenigstens zwei Magnetelemente 5 z.B. in Form von Magnetstäben, radial um einen Außenumfangsabschnitt der Verbindungsstange 20 angeordnet werden, wie in Fig. 4a und 4b angedeutet ist, werden zunächst die einzelnen Magnetstäbe in die Magnetelement-Aufnahme des zweiten Wellenteils 13 eingeführt und in die Nut 32 eingesetzt. Die Magnetelemente 5 bilden dabei mit ihren Innenumfangsflächen eine Durchgangsöffnung, durch welche anschließend die Verbindungsstange 20 hindurchgeführt werden kann. Gleiches gilt für die Trägerplattensegmente, welche eine Trägerplatte 18 bilden. Diese werden zunächst in die Nut 32 eingesetzt und dabei radial um einen Außenumfangsabschnitt der Verbindungsstange 20 angeordnet. Die Trägerplattensegmente bilden ebenfalls mit ihrer Innenumfangsfläche eine Durchgangsöffnung durch welche die Verbindungsstange 20 später hindurchgeführt wird. Dabei können, die Magnetelemente 5 auf ihrer Außenumfangsfläche, die Nut 32 auf ihrer Innenumfangsfläche und/oder wenigstens eine Trägerplatte 18 auf ihrem Außenumfang wahlweise zusätzlich mit dem Ausgleichselement 17 versehen sein.

In einer alternativen Ausführungsform können auch nur die Magnetelemente 5 in der Nut 32 ohne die Trägerplatten 18 oder bei zwei Trägerplatten nur eine Trägerplatte 18 in der Nut 32 aufgenommen werden, wie zuvor beschrieben. In diesem Fall kann die Trägerplatte 18, welche nicht in der Nut 32 des Wellenteils 13 aufgenommen wird, stattdessen auch scheibenförmig ausgebildet sein und einen Außendurchmesser aufweisen, welcher an den Innendurchmesser des Wellenteils 13 angepasst ist, so dass die Trägerplatte 18 in das Wellenteil 13 eingeschoben und an dem zugeordneten Ende des jeweiligen Magnetelements 5 außerhalb der Nut 32 in dem Wellenteil 13 positioniert werden kann, wie in dem Beispiel in Fig. 1 mit einer gepunkteten Linie angedeutet ist.

Des Weiteren kann bei der Ausbildung des Wellenteils 13 mit einer Magnetelement-Aufnahme 16 mit der zuvor beschriebenen Vertiefung, z.B. einer zylindrischen Vertiefung mit einem flachen oder alternativ spitz zulaufenden Boden 33, insbesondere konisch zulaufenden Boden 33, wie in Fig. 2 angedeutet ist, wenigstens ein hülsenförmiges Magnetelement 5 in die Vertiefung des Wellenteils 13 eingeschoben werden. Dabei ist zum Einführen des jeweiligen Magnetelements 5 in die Magnetelement-Aufnahme 16, der Innendurchmesser der Magnetelement-Aufnahme 16 bzw. der Vertiefung des Wellenteils 13 an den Außendurchmesser des hülsenförmigen Magnetelements 5 derart angepasst, dass das Magnetelement 5 in die Magnetelement-Aufnahme 16 bzw. Vertiefung eingeschoben werden kann. Der spitz zulaufende Boden 33 bildet dabei eine Aufnahme 35 für das nach außen hervortretendem zeigende spitze oder stumpfe Ende des oder der Magnetelemente 5.

Das jeweilige in den Fig. 1 und 2 beschriebene Magnetelement 5, sowie das jeweilige in den nachfolgenden Fig. 3a, 3b, 4a und 4b gezeigte Magnetelement, kann radial oder diamaterial magnetisiert ausgebildet sein, je nach Funktion und Einsatzzweck. Dies gilt für alle Ausführungsformen der Erfindung.

Wie in Fig. 1 und 2 des Weiteren dargestellt ist, sind bei der elektrischen Maschine 1 Spannelemente 19 vorgesehen zum Verspannen der Wellenteile 12 und 13 und der dazwischen angeordneten Magnetelemente 5 und der Trägerplatte 18 des Rotors 4 miteinander in axialer Richtung. Die Spannelemente 19 sind dabei wie in Fig. 1 und 2 gezeigt z.B. an den beiden äußeren Enden der Laufräder 8, 9 auf der Verbindungsstange 20 angeordnet und einstellbar, um eine geeignete Vorspannung einzustellen. Als Spannelemente können beispielsweise Spannscheiben oder jede andere geeignete Spannelemente vorgesehen werden.

Die gegebenenfalls vorhandene(n) axiale(n) Trägerplatte(n) 18 ist bzw. sind an dem bzw. den Enden der Magnetelemente 5 derart angeordnet, dass durch die auf der Verbindungsstange 20 vorgesehenen Spannelemente 19 eine entsprechend in axialer Richtung generierte und geleitete mechanische Vorspannung bereitgestellt werden kann, welche die Aufnahme und radiale Positionierung der Magnetelemente 5 gewährleistet.

Die in erster Linie für die Halterung und Positionierung der Magnetelemente 5 konzipierte jeweilige axiale Trägerplatte 18 kann des Weiteren die folgende zusätzliche Funktion haben. Im Falle, dass die Trägerplatte 18 aus einem Material mit entsprechend ausgewählten magnetischen Eigenschaften ausgebildet wird, kann sie zusätzlich einen Teil des Streuflusses an dem jeweiligen Rand der Magnetelemente 5 abfangen. Dadurch gelangen die schnell rotierenden magnetischen Felder nicht in die nahe gelegenen stationären Konstruktionselemente der elektrischen Maschine 1. Hierdurch werden Zusatzverluste und die Erwärmung der elektrischen Maschine 1 reduziert. Die jeweilige Trägerplatte 18 kann dazu beispielsweise aus einem nicht magnetischen Material oder Materialkombination hergestellt werden, wie z.B. aus Stahl oder aus einem anderen nicht magnetischen Metall oder nicht magnetischen Metalllegierung.

Die Welle 6 ist mittels Radiallagern 24 gelagert, welche auf jeweils einem der Wellenteile 12, 13 angeordnet sind, wie in Fig. 1 und 2 gezeigt ist.

Des Weiteren ist an einem Wellenteil, in den Fig. 1 und 2 das zweite Wellenteil 13, ein Axiallager 25 vorgesehen. In den Fig. 1 und Fig. 2 ist dabei die Rotationsscheibe des Axiallagers 25 dargestellt. Das Axiallager 25 ist beispielsweise ein herkömmliches Gaslager, z.B. ein dynamisches Gaslager. Die Erfindung ist jedoch nicht auf ein herkömmliches Gaslager als Axiallager beschränkt. Grundsätzlich kann jedes Axiallager eingesetzt werden, welches zur Lagerung des Wellenteils der elektrischen Maschine 1 geeignet ist.

Die beiden Laufräder 8, 9 sind fest mit der Verbindungsstange 20 der elektrischen Maschine und dem Rotor 4 durch die Spannelemente 19 verbunden.

Die Verbindungsstange 20 kann beispielsweise aus einem Kohlefasermaterial hergestellt sein. Die Erfindung ist jedoch nicht auf Kohlefasermaterial oder ein anderes Fasermaterial für die Verbindungsstange 20 beschränkt. Es kann jedes Material eingesetzt werden, welches für die Verbindungsstange 20 geeignet ist.

Die Passung zwischen der Verbindungsstange 20 und den Wellenteilen 12, 13 kann derart gewählt werden, dass eine relative Verschiebung zwischen der Verbindungsstange 20 und den Wellenteilen 12, 13 oder ein Schiebesitz der Wellenteile 12, 13 auf der Verbindungsstange 20 vorzugsweise im gesamten Temperaturbereich oder Betriebstemperaturbereich möglich ist.

Die Verbindungsstange 20 ist beispielsweise aus einem Material mit einer guten oder möglichst großen mechanischen Stabilität und Festigkeit und weist vorzugsweise einen möglichst niedrigen thermischen Ausdehnungskoeffizienten auf. Wie zuvor beschrieben kann die Verbindungsstange 20 beispielsweise aus einem Kohlfasermaterial oder einem anderen geeigneten Faserverbundwerkstoff hergestellt sein oder dieses zumindest aufweisen. Die Erfindung ist aber nicht auf einen Faserverbundwerkstoff oder Kohlefasermaterial für die Herstellung der Verbindungstange 20 beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Wie in den Fig. 1 und 2 gezeigt ist, sind die beiden Wellenteile gemäß der Erfindung ineinander steckbar ausgebildet. Dazu weist das zweite Wellenteil 13, neben der Magnetelement-Aufnahme 16 eine zusätzliche Wellenteil-Aufnahme 36 auf zur Aufnahme zumindest eines Abschnitts des anderen Wellenteils 12 auf. Das andere Wellenteil, hier erste Wellenteil 12, kann dabei mit seinem inneren Ende 14 an dem gegenüberliegenden Ende des jeweiligen Magnetelements 5 in der Magnetelement-Aufnahme 16 des zweiten Wellenteils 13 oder einer zwischen dem jeweiligen Magnetelement 5 und dem ersten Wellenteil 12 angeordneten Trägerplatte 18 aufliegen. Die beiden Wellenteile 12, 13, das jeweilige dazwischen angeordnete Magnetelement 5 und gegebenenfalls vorhandene Trägerplatte(n) 18 werden in axialer Richtung miteinander verspannt, beispielsweise mittels der in den Fig. 1 und 2 gezeigten Spannelemente 19.

In einem Beispiel, wie in Fig. 1 mit einer gestrichelten und doppelgepunkteten Linie angedeutet ist, kann die erste Welle 12 mit einem konstanten Außendurchmesser ausgebildet sein, d.h. ohne einen Absatz, und in der Wellenteil-Aufnahme 36 des gegenüberliegenden anderen Wellenteils 13 aufgenommen sein, oder alternativ wie ebenfalls in Fig. 1 gezeigt ist, einen Absatz bildenden Abschnitt aufweisen mit einem kleineren inneren Außendurchmesser und einem größeren äußeren Außendurchmesser.

Es kann die erste Welle 12 auch mit diesem Absatz an dem inneren Ende des zweiten Wellenteils 13 außen aufliegen und gegen das zweite Wellenteil 13 beispielsweise mittels der in Fig. 1 und 2 gezeigten Spannelemente 19 in axialer Richtung verspannt werden.

Die Konstruktion des Rotors 4 der elektrischen Maschine 1 hat den Vorteil, dass die strukturelle Festigkeit und Steifigkeit bei einer möglichst maximalen aktiven Masse der Magnetelemente 5 vergrößert und damit eine maximal erreichbare Energiedichte der Maschine 1 erzielt werden kann. Weiter kann die Steifigkeit durch die Einstellung der Zugkraft an der Verbindungsstange 20 eingestellt werden. Die Verbindungsstange 20 oder -stab arbeitet auf Zug. Dies hat einen großen Einfluss auf das Vergrößern der Steifigkeit bei einer nur sehr kleinen Zusatzmasse und einem vernachlässigbaren Zusatz-Trägheitsmoments des Rotors 4. Des Weiteren erfolgt keine wesentliche Reduzierung der aktiven Magnetmasse $Vm$, wobei für die Magnetmasse $Vm$ gilt:

$$V_m = \frac{\pi}{4}(Dm^2 - Dst^2) \cdot Lm$$

Wobei $Dst \gg Dm$

$Vm$:     Magnetmasse
$Dst$:     Durchmesser der Verbindungsstange
$Dm$:     Magnetdurchmesser
$Lm$:     Magnetlänge

Die Verbindungsstange 20 weist beispielsweise eine zylindrische Form auf oder zumindest einen zylindrischen Abschnitt mit dem Durchmesser $Dst$. Gleiches gilt für die jeweilige Magnetelement-Aufnahme. Auch diese kann einen zylindrischen Querschnitt oder alternativ auch beispielsweise einen eckigen oder ovalen Querschnitt usw. aufweisen. Die Verbindungsstange 20 und die Magnetelement-Aufnahme des jeweiligen Wellenteils können jedoch jeden beliebigen Querschnitt aufweisen, je nach Funktion und Einsatzzweck.

In einer Ausführungsform können zwischen den äußeren Enden 22 und 23 des ersten und zweiten Wellenteils 12, 13 in den Fig. 1 und 2 und dem ersten und zweiten Laufrad 8, 9 zusätzlich optionale Zwischenscheiben 34 z.B. aus Metall vorgesehen werden. Diese können beispielsweise eine gute Wärmeleitung aufweisen und optional zusätzlich in axialer Richtung federnd sein. Mittels der Zwischenscheiben 34 können unterschiedliche Materialien für die Wellenteile 12, 13 und die gegenüberliegenden Laufräder 8, 9 und die damit verbundenen unterschiedlichen Materialeigenschaften ausgeglichen werden. Die Zwischenscheiben 34 sind in Fig. 2 mit einer gestrichelten-doppelpunktierten Linie angedeutet.

In den Fig. 3a und 3b ist ein Beispiel für ein hülsenförmiges Magnetelement 5 gezeigt, wobei Fig. 3a eine Seitenansicht und Fig. 3b eine Querschnittansicht des hülsenförmigen Magnetelements 5 zeigt.

Das Magnetelement 5 kann z.B. als Zylinder wie in Fig. 3a gezeigt ist mit einem flachen Ende und einem kegelstumpfförmigen Ende als einem Beispiel für ein nach außen hervortretendes stumpfes Ende ausgebildet sein, oder wie in Fig. 3a mit einer gepunkteten Linie angedeutet ist, ein kegelförmiges Ende als ein Beispiel für ein nach außen hervortretendes spitzes Ende aufweisen. Die Erfindung ist jedoch auf die gezeigten Beispiele für nach außen hervortretende spitze und stumpfe Enden nicht beschränkt. Des Weiteren kann das Magnetelement 5, wie in Fig. 3b durch Pfeile angedeutet, diametral oder radial magnetisiert sein. Wenigstens ein solches hülsenförmiges Magnetelement 5 kann in der Magnetelement-Aufnahme in Fig. 2 eingeführt oder eingeschoben werden. Im Falle von mehreren solchen Magnetelementen 5, können diese in axialer Richtung hintereinander in die Magnetelement-Aufnahme eingeführt werden.

In den Fig. 4a und 4b ist ein Beispiel für eine segmentierte Magnetelement-Anordnung aus beispielsweise zwei Magnetelementen 5 gezeigt, wobei Fig. 4a eine Seitenansicht und Fig. 4b eine Querschnittansicht der Magnetelemente 5 zeigt.

Die beiden Magnetelemente 5 können, wie in Fig. 4a gezeigt ist, jeweils ein flaches Ende und ein nach außen hervortretendes spitzes Ende aufweisen oder wie in Fig. 4a mit einer gepunkteten Linie angedeutet ist auch ein nach außen hervortretendes stumpfes Ende aufweisen zum Ausbilden eines gemeinsamen kegelstumpfförmigen oder kegelförmigen Endes der Magnetelemente. Die beiden Magnetelemente 5 können wie zuvor beschrieben in eine nutförmige Magnetelement-Aufnahme eines Wellenteils eingesetzt werden, wobei sie mit ihrem Innenumfang eine Durchführung für die Verbindungsstange bilden, welche z.B. anschließend hindurchgeführt werden kann.

Des Weiteren können die Magnetelemente 5, wie in Fig. 4b durch Pfeile angedeutet, diametral oder radial magnetisiert sein. Wenigstens eines dieser Magnetelemente 5 kann in der Nut in Fig. 1, sowie auch in der Magnetelement-Aufnahme in den Fig. 2 eingesetzt werden.

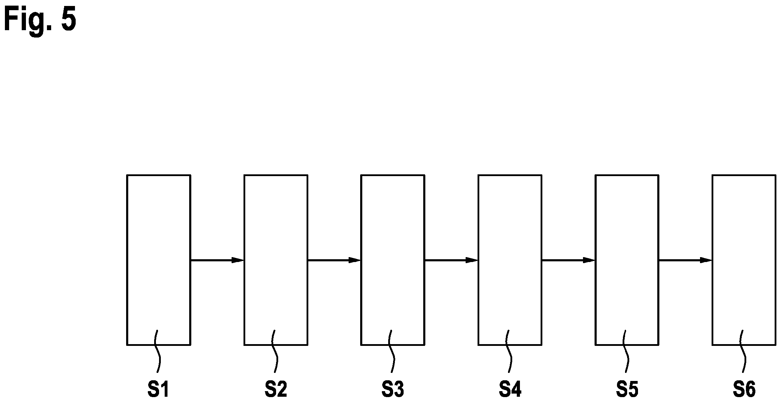

In Fig. 5 ist ein Flussdiagramm zur Herstellung des zuvor beispielhaft mit Bezug auf Fig. 1 und 2, sowie 3a, 3b, 4a und 4b beschriebenen erfindungsgemäßen Rotorsystems dargestellt.

Zur Herstellung des Rotors des erfindungsgemäßen Rotorsystems wird in einem ersten Schritt S1 wenigstens eines der Wellenteile mit einer Magnetelement-Aufnahme zur Aufnahme des jeweiligen Magnetelements bereitgestellt. Dabei kann die Magnetelement-Aufnahme an ihrem Innenumfang oder das wenigstens eine Magnetelement an seinem Außenumfang optional mit dem elastischen Ausgleichselement versehen werden, bevor das Magnetelement anschließend in die Magnetelement-Aufnahme eingeführt wird.

In einem nächsten Schritt S2 wird das wenigstens ein Magnetelement in die Magnetelement-Aufnahme eingeführt. Wahlweise zusätzlich kann dabei eine erste Trägerplatte in die Magnetelement-Aufnahme eingeführt werden, bevor anschließend das jeweilige Magnetelement in die Magnetelement-Aufnahme eingesetzt wird. Je nach Ausführung der Magnetelement-Aufnahme, z.B. in Form einer Nut, kann die Magnetelement-Anordnung und sofern vorhanden die Trägerplatte(n) segmentiert ausgebildet sein.

In einem weiteren Schritt S3 kann eine zweite Trägerplatte wahlweise zusätzlich an den äußeren Enden der Magnetanordnung angeordnet werden. Sofern eine erste Trägerplatte bereits in der Magnetelement-Aufnahme positioniert wurde, wird lediglich die zweite verbleibende Trägerplatte ebenfalls in der Magnetelement-Aufnahme oder daran anschließend in dem Wellenteil angeordnet. Dabei kann zwischen der Innenseite der Magnetelement-Aufnahme oder Innenseite des Wellenteils und der Außenseite der zweiten Trägerplatte wahlweise zusätzlich ebenfalls das elastische Ausgleichselement vorgesehen sein.

In einem nächsten Schritt S4 werden die beiden Wellenteile zusammengesteckt.

Das Aushärten des für das Ausgleichselement verwendete Harz kann beispielsweise je nach verwendetem Harz vor und/oder nach dem Positionieren des wenigstens einen Magnetelements in der Magnetelement-Aufnahme, sowie vor und/oder nach dem Positionieren gegebenenfalls einer ersten oder zweiten Trägerplatte erfolgen.

Die Verbindungsstange kann dabei im Anschluss an den Schritt S2 durch das Wellenteil und die durch das wenigstens eine Magnetelement gebildete Durchführung und, falls bereit eingesetzt, durch die Öffnung der ersten Trägerplatte hindurchgeführt werden.

Ebenso kann erst im Anschluss an den Schritt S3 vor dem Schritt S4 die Verbindungsstange durch das Wellenteil, die Öffnung der ersten und zweiten Trägerplatte und die Durchführung des wenigstens einen Magnetelements hindurchgeführt werden.

Des Weiteren kann die Verbindungsstange auch erst in dem Schritt S4 nach dem Zusammenstecken der beiden Wellenteile durch die Wellenteile und den Rotor aus wenigstens einem Magnetelement und falls vorhanden wenigstens einer Trägerplatte hindurchgesteckt werden. Ebenso kann auch die Verbindungsstange erst durch das Wellenteil und seinen Rotor hindurchgeführt und dann das andere Wellenteil auf die Verbindungsstange aufgesteckt werden oder alternativ das andere Wellenteil zusammen mit der Verbindungsstange mit dem Rotor und seinem Wellenteil zusammengesteckt werden.

Das Magnetelement, insbesondere das hülsenförmige Magnetelement, kann radial oder diamaterial magnetisiert ausgebildet sein. Dies gilt für alle Ausführungsformen der Erfindung.

Zum Herstellen einer elektrischen Maschine, wie sie zuvor mit Bezug auf die Fig. 1 und 2 beschrieben wurde, mit dem erfindungsgemäßen Rotorsystem, werden in einem anschließenden zusätzlichen Schritt S5, nach dem Verbinden der Wellenteile in Schritt S4, die beiden Laufräder auf der Verbindungsstange angeordnet und schließlich die Laufräder und die zwischen den Laufränder angeordneten Elemente durch die Spannelemente gegeneinander in axialer Richtung verspannt.

Die radiale und axiale Lagerung der Welle mittels wenigstens zwei Radiallagern und wenigstens einem Axiallager können in einem geeigneten der zuvor beschriebenen Schritte vorgesehen werden.

Der Schutzbereich wird durch die Ansprüche bestimmt.


**Patentansprüche**

1.  Rotorsystem für eine elektrische Maschine (1) aufweisend:

    wenigstens ein Magnetelement (5),
    eine zweigeteilte Welle (6) mit einem ersten Wellenteil (12) und einem zweiten Wellenteil (13), wobei wenigstens ein Wellenteil (13) eine Magnetelement-Aufnahme (16) zur Aufnahme des wenigstens einen Magnetelements (5) und eine Wellenteil-Aufnahme (36) aufweist zur Aufnahme zumindest eines Abschnitts des gegenüberliegenden anderen Wellenteils (12),
    wobei eine Verbindungsstange (20) durch die beiden Wellenteile (12, 13) hindurchgeführt ist zum Verbinden der beiden ineinander steckbaren Wellenteile (12, 13), wobei das wenigstens eine Magnetelement (5) in der Magnetelement-Aufnahme (16) auf die Verbindungsstange (20) aufgeschoben oder um diese angeordnet ist, wobei die beiden Wellenteile (12, 13) und das dazwischen angeordnete Magnetelement (5) in axialer Richtung miteinander verspannt sind, wobei die beiden Wellenteile (12, 13) auf der gemeinsamen Verbindungsstange (20) angeordnet sind, deren Längsachse gleichzeitig auch die Rotationsachse (21) der Welle (6) und ihrer Wellenteile (12, 13) und des dazwischen angeordneten Magnetelements (5) bildet, wobei das Magnetelement (5) ein nach außen hervortretendes spitzes oder stumpfes Ende aufweist, wobei entsprechend die Magnetelement-Aufnahme (16) als entlang der Rotationsachse (21) konische Vertiefung ausgebildet ist, wobei eine Symmetrieachse des Magnetelements (5) auf der Rotationsachse (21) angeordnet ist.

2.  Rotorsystem nach Anspruch 1, **dadurch gekennzeichnet, dass** die Verbindungsstange (20) aus einem Material mit einer möglichst großen mechanischen Stabilität und einem möglichst niedrigen thermischen Ausdehnungskoeffizienten hergestellt ist, insbesondere aus einem Faserverbundmaterial, weiter insbesondere aus Kohlefaserverbundmaterial.

3. Rotorsystem nach Anspruch 1 oder 2, **dadurch gekennzeichnet, dass** das wenigstens eine Magnetelement (5) eine Magnethülse ist und das wenigstens eine Magnetelement (5) insbesondere radial oder diametral magnetisiert ausgebildet ist.

4. Rotorsystem nach einem der vorstehenden Ansprüche, **dadurch gekennzeichnet, dass** mehrere Magnetelemente (5) das konische Ende ausbilden.

5. Rotorsystem nach einem der vorstehenden Ansprüche, **dadurch gekennzeichnet, dass** die Wellenteil-Aufnahme (36) denselben Innendurchmesser oder einen größeren Innendurchmesser als die Magnetelement-Aufnahme (16) aufweist.

6. Rotorsystem nach einem der vorstehenden Ansprüche, **dadurch gekennzeichnet, dass** das in der Wellenteil-Aufnahme (36) aufzunehmende Wellenteil (12) einen konstanten Außendurchmesser aufweist, welcher an den Innendurchmesser der Wellenteil-Aufnahme (36) des anderen Wellenteils (13) derart angepasst ist, um in die Wellenteil-Aufnahme (36) eingeschoben zu werden, oder
dass das in der Wellenteil-Aufnahme (36) aufzunehmende Wellenteil (12) einen abgestuften Außendurchmesser mit einem kleineren inneren Außendurchmesser und einem größeren äußeren Außendurchmesser aufweist, und mit dem kleineren inneren Außendurchmesser in der Wellenteil-Aufnahme (36) aufgenommen ist und mit dem größerem äußeren Außendurchmesser entweder an dem gegenüberliegenden Wellenteil (13) anliegt und gegen dieses in axialer Richtung verspannbar ist oder mit seinem kleineren inneren Außendurchmesser an dem Ende des wenigstens einen Magnetelements (5) oder einer dazwischen angeordneten zusätzlichen Trägerplatte (18) anliegt und gegen diese in axialer Richtung verspannbar ist.

7. Rotorsystem nach einem der vorstehenden Ansprüche, **dadurch gekennzeichnet, dass** an der Innenumfangsfläche der Magnetelement-Aufnahme (16) und/oder an der Außenumfangsfläche des wenigstens einen Magnetelements (5) und/oder an der Innenumfangsfläche der Wellenteil-Aufnahme (36) und/oder der Außenumfangsfläche des einzuführenden Wellenteiles (12) ein zumindest teilweise elastisches Ausgleichselement (17) vorgesehen ist, wobei das Ausgleichselement (17) vorzugsweise eine Ausgleichsschicht ist, welche insbesondere aus einem Harz besteht, welches nach dem Aushärten zumindest teilweise elastisch ist.

8. Rotorsystem nach einem der vorstehenden Ansprüche, **dadurch gekennzeichnet, dass** zwischen wenigstens einem Ende des wenigstens einen Magnetelementes (5) und dem dazu gegenüberliegenden Wellenteil (12, 13) eine Trägerplatte (18) vorgesehen ist, wobei die Trägerplatte (18) eine axiale Aufnahme für das wenigstens eine Magnetelement (5) bildet und wobei die Trägerplatte (18) segmentiert oder als Scheibe mit einer Durchgangsbohrung ausgebildet ist.

9. Rotorsystem nach Anspruch 8, **dadurch gekennzeichnet, dass** die wenigstens eine Trägerplatte (18) aus einem nicht magnetischen Material oder einer nicht magnetischen Materialkombination hergestellt ist.

10. Rotorsystem nach einem der Ansprüche 8 oder 9, **dadurch gekennzeichnet, dass** zwischen wenigstens einem Ende des wenigstens einen Magnetelements (5) und der Trägerplatte (18) und/oder zwischen der Trägerplatte (18) und dem gegenüberliegenden Wellenteil (12, 13) ein elastisches Ausgleichselement (17) vorgesehen ist.

11. Elektrische Maschine (1) mit einem Rotorsystem gemäß einem der vorstehenden Ansprüche, wobei die elektrische Maschine (1) ein erstes und zweites Laufrad (8, 9) aufweist, welche auf der Verbindungsstange (20), die sich durch das erste und zweite Wellenteil (12, 13) erstreckt, gegenüberliegend dem jeweiligen Wellenteil (12, 13) angeordnet sind, wobei vorzugsweise eine zusätzliche Zwischenscheibe zwischen wenigstens einem Laufrad und seinem zugeordneten Wellenteil vorgesehen ist.

12. Elektrische Maschine (1) nach Anspruch 11, **dadurch gekennzeichnet, dass** die elektrische Maschine (1) eine Hochgeschwindigkeitsmaschine, insbesondere eine Turbine und/oder ein Kompressor ist.

13. Verfahren zur Herstellung eines Rotorsystems (4) für eine elektrische Maschine (1) gemäß einem der Ansprüche 1 bis 10, wobei das Verfahren die Schritte aufweist:

Bereitstellen einer Verbindungsstange (20), Bereitstellen einer zweigeteilten Welle (6) mit einem ersten Wellenteil (12) und einem zweiten Wellenteil (13), wobei eines der Wellenteile (13) eine Magnetelement-Aufnahme (16) zur Aufnahme des wenigstens einen Magnetelements (5) und eine Wellenteil-Aufnahme (36) zur Aufnahme zumindest eines Abschnitts des gegenüberliegenden anderen Wellenteils (12) aufweist;
Einsetzen des wenigstens einen Magnetelements (5) in die Magnetelement-Aufnahme (16) und Einsetzen des Abschnitts des gegenüberliegenden anderen Wellenteils (12) in die Wellenteil-Aufnahme (36), und Einführen der Verbindungsstange (20) durch die beiden Wellenteile (12, 13) vor, während oder nach dem Einsetzen des Magnetelements (5) in die Magnetelement-Aufnahme (16) des einen Wellenteils (13), Verspannen der beiden Wellenteile (12, 13) und des dazwischen angeordneten Magnetelements (5) in axialer Richtung, wobei eine Symmetrieachse des Magnetelements (5) auf der Rotationsachse (21) der Welle (6) angeordnet ist, wobei das Magnetelement (5) ein nach außen hervortretendes spitzes oder stumpfes Ende aufweist, wobei entsprechend die Magnetelement-Aufnahme (16) als entlang der Rotationsachse (21) konische Vertiefung ausgebildet ist.

14. Verfahren nach Anspruch 13, **gekennzeichnet durch** Anordnen einer Trägerplatte (18) zwischen wenigstens einem Wellenteil (12, 13) und dem gegenüberliegenden Ende des wenigstens einen Magnetelements (5) zur Ausbildung einer axialen Aufnahme für das wenigstens eine Magnetelement (5).


**Claims**

1. Rotor system for an electrical machine (1), having:

   at least one magnetic element (5),
   a two-part shaft (6) with a first shaft part (12) and a second shaft part (13), wherein at least one shaft part (13) has a magnetic element receptacle (16) for receiving the at least one magnetic element (5) and a shaft part receptacle (36) for receiving at least a portion of the other shaft part (12) situated opposite,
   wherein a connecting rod (20) is guided through the two shaft parts (12, 13) for the purpose of connecting the two shaft parts (12, 13) which can be inserted one into the other, wherein the at least one magnetic element (5) in the magnetic element receptacle (16) is pushed onto the connecting rod (20) or is arranged around it,
   wherein the two shaft parts (12, 13) and the magnetic element (5) arranged therebetween are braced with respect to each other in the axial direction,
   wherein the two shaft parts (12, 13) are arranged on the common connecting rod (20), the longitudinal axis of which simultaneously also forms the axis of rotation (21) of the shaft (6) and its shaft parts (12, 13) and the magnetic element (5) arranged therebetween,
   wherein the magnetic element (5) has an outwardly protruding pointed or blunt end, wherein the magnetic element receptacle (16) is accordingly formed as a recess which is conical along the rotation axis (21),
   wherein an axis of symmetry of the magnetic element (5) is arranged on the axis of rotation (21).

2. Rotor system according to Claim 1, **characterized in that** the connecting rod (20) is produced from a material with the greatest possible mechanical stability and the lowest possible coefficient of thermal expansion, particularly from a fibre composite material, further particularly from carbon fibre composite material.

3. Rotor system according to Claim 1 or 2, **characterized in that** the at least one magnetic element (5) is a magnetic sleeve and the at least one magnetic element (5) is designed in a radially or diametrically magnetized manner.

4. Rotor system according to one of the preceding claims, **characterized in that** a plurality of magnetic elements (5) form the conical end.

5. Rotor system according to one of the preceding claims, **characterized in that** the shaft part receptacle (36) has the same inside diameter as or a larger inside diameter than the magnetic element receptacle (16).

6. Rotor system according to one of the preceding claims, **characterized**

   **in that** the shaft part (12) to be received in the shaft part receptacle (36) has a constant outside diameter which is matched to the inside diameter of the shaft part receptacle (36) of the other shaft part (13) in such a way as to be pushed into the shaft part receptacle (36), or
   **in that** the shaft part (12) to be received in the shaft part receptacle (36) has a stepped outside diameter with a smaller inner outside diameter and a larger outer outside diameter and by way of the smaller inner outside diameter is received in the shaft part receptacle (36) and by way of the larger outer outside diameter either bears against the shaft part (13) situated opposite and can be braced against it in the axial direction or by way of its smaller inner outside diameter bears against the end of the at least one magnetic element (5) or an additional carrier plate (18) arranged therebetween and can be braced against it in the axial direction.

**7.** Rotor system according to one of the preceding claims, **characterized in that** an at least partially elastic compensation element (17) is provided on the inner circumferential face of the magnetic element receptacle (16) and/or on the outer circumferential face of the at least one magnetic element (5) and/or on the inner circumferential face of the shaft part receptacle (36) and/or the outer circumferential surface of the shaft part (12) to be inserted, wherein the compensation element (17) is preferably a compensation layer which particularly consists of a resin which is at least partially elastic after curing.

**8.** Rotor system according to one of the preceding claims, **characterized in that** a carrier plate (18) is provided between at least one end of the at least one magnetic element (5) and the shaft part (12, 13) situated opposite to it, wherein the carrier plate (18) forms an axial receptacle for the at least one magnetic element (5), and wherein the carrier plate (18) is segmented or is in the form of a disc with a passage bore.

**9.** Rotor system according to Claim 8, **characterized in that** the at least one carrier plate (18) is produced from a non-magnetic material or a non-magnetic combination of materials.

**10.** Rotor system according to either of Claims 8 and 9, **characterized in that** an elastic compensation element (17) is provided between at least one end of the at least one magnetic element (5) and the carrier plate (18) and/or between the carrier plate (18) and the shaft part (12, 13) situated opposite.

**11.** Electrical machine (1) having a rotor system according to one of the preceding claims, wherein the electrical machine (1) has a first and a second impeller (8, 9) which are arranged on the connecting rod (20), which extends through the first and the second shaft part (12, 13), opposite the respective shaft part (12, 13), wherein an additional intermediate disc is preferably provided between at least one impeller and its associated shaft part.

**12.** Electrical machine (1) according to Claim 11, **characterized in that** the electrical machine (1) is a high-speed machine, in particular a turbine and/or a compressor.

**13.** Method for producing a rotor system (4) for an electrical machine (1) according to one of Claims 1 to 10, wherein the method comprises the steps of:

providing a connecting rod (20),
providing a two-part shaft (6) with a first shaft part (12) and a second shaft part (13), wherein one of the shaft parts (13) has a magnetic element receptacle (16) for receiving the at least one magnetic element (5) and a shaft part receptacle (36) for receiving at least a portion of the other shaft part (12) situated opposite;
inserting the at least one magnetic element (5) into the magnetic element receptacle (16) and inserting the portion of the other shaft part (12) situated opposite into the shaft part receptacle (36), and
inserting the connecting rod (20) through the two shaft parts (12, 13) before, during or after the insertion of the magnetic element (5) into the magnetic element receptacle (16) of the said shaft part (13),
bracing the two shaft parts (12, 13) and the magnetic element (5) arranged therebetween in the axial direction, wherein an axis of symmetry of the magnetic element (5) is arranged on the axis of rotation (21) of the shaft (6),
wherein the magnetic element (5) has an outwardly protruding pointed or blunt end, wherein the magnetic element receptacle (16) is accordingly formed as a recess which is conical along the rotation axis (21).

**14.** Method according to Claim 13, **characterized by** arranging a carrier plate (18) between at least one shaft part (12, 13) and the opposite end of the at least one magnetic element (5) for forming an axial receptacle for the at least one magnetic element (5).

**Revendications**

**1.** Système formant rotor destiné à une machine électrique (1), ledit système comportant :

au moins un élément magnétique (5),
un arbre (6) en deux parties pourvu d'une première partie d'arbre (12) et d'une deuxième partie d'arbre (13), au moins une partie d'arbre (13) comportant un logement d'élément magnétique (16) destiné à recevoir l'au moins un élément magnétique (5) et un logement de partie d'arbre (36) destiné à recevoir au moins une portion de l'autre partie d'arbre opposée (12),
une barre de liaison (20) étant guidée à travers les deux parties d'arbre (12, 13) pour relier les deux parties d'arbre (12, 13) qui peuvent être enfichées l'une dans l'autre,
l'au moins un élément magnétique (5) étant placé de manière coulissante sur la barre de liaison (20), ou
disposé autour de celle-ci, dans le logement d'élément magnétique (16),
les deux parties d'arbre (12, 13) et l'élément magnétique (5) disposé entre celles-ci étant serrés ensemble dans la direction axiale,

les deux parties d'arbre (12, 13) étant disposées sur la barre de liaison commune (20) dont l'axe longitudinal forme en même temps l'axe de rotation (21) de l'arbre (6) et de ses parties d'arbre (12, 13) et de l'élément magnétique (5) disposé entre celles-ci,

l'élément magnétique (5) comportant une extrémité pointue ou émoussée faisant saillant vers l'extérieur, le logement d'élément magnétique (16) étant conçu de manière correspondante sous la forme d'un creux conique le long de l'axe de rotation (21),

un axe de symétrie de l'élément magnétique (5) étant disposé sur l'axe de rotation (21).

2. Système formant rotor selon la revendication 1, **caractérisé en ce que** la barre de liaison (20) est réalisée à partir d'une matière présentant la plus grande stabilité mécanique possible et le plus faible coefficient de dilatation thermique possible, notamment à partir d'une matière composite fibreuse, plus particulièrement à partir d'une matière composite en fibre de carbone.

3. Système formant rotor selon la revendication 1 ou 2, **caractérisé en ce que** l'au moins un élément magnétique (5) est un manchon magnétique et l'au moins un élément magnétique (5) est conçu notamment pour être radialement ou diamétralement aimanté.

4. Système formant rotor selon l'une des revendications précédentes, **caractérisé en ce qu'**une pluralité d'éléments magnétiques (5) forment l'extrémité conique.

5. Système formant rotor selon l'une des revendications précédentes, **caractérisé en ce que** le logement de partie d'arbre (36) a le même diamètre intérieur ou un diamètre intérieur plus grand que le logement d'élément magnétique (16).

6. Système formant rotor selon l'une des revendications précédentes, **caractérisé en ce que** la partie d'arbre (12) destinée à être reçue dans le logement de partie d'arbre (36) a un diamètre extérieur constant qui est adapté au diamètre intérieur du logement de partie d'arbre (36) de l'autre partie d'arbre (13) pour être insérée dans le logement de partie d'arbre (36), ou

la partie d'arbre (12) destinée à être reçue dans le logement de partie d'arbre (36) a un diamètre extérieur étagé, avec un plus petit diamètre extérieur côté intérieur et un plus grand diamètre extérieur côté extérieur, et est reçue dans le logement de partie d'arbre (36) avec son plus petit diamètre extérieur côté intérieur et vient en appui avec son plus grand diamètre extérieur côté extérieur sur la partie d'arbre opposée (13) et peut être serrée contre celle-ci dans la direction axiale, ou bien vient en appui avec son plus petit diamètre extérieur côté intérieur sur l'extrémité de l'au moins un élément magnétique (5) ou une plaque de support supplémentaire (18) disposée entre ceux-ci et peut être serrée contre celle-ci dans la direction axiale.

7. Système formant rotor selon l'une des revendications précédentes, **caractérisé en ce qu'**un élément de compensation (17) au moins partiellement élastique est prévu sur la surface périphérique intérieure du logement d'élément magnétique (16) et/ou sur la surface périphérique extérieure de l'au moins un élément magnétique (5) et/ou sur la surface périphérique intérieure du logement de partie d'arbre (36) et/ou sur la surface périphérique extérieure de la partie d'arbre (12) à insérer, l'élément de compensation (17) étant de préférence une couche de compensation qui est notamment en une résine qui est au moins partiellement élastique après durcissement.

8. Système formant rotor selon l'une des revendications précédentes, **caractérisé en ce que** une plaque de support (18) est prévue entre au moins une extrémité de l'au moins un élément magnétique (5) et la partie d'arbre opposée (12, 13), la plaque de support (18) formant un logement axial destiné à l'au moins un élément magnétique (5) et la plaque de support (18) étant segmentée ou conçue comme un disque pourvu d'un trou traversant.

9. Système formant rotor selon la revendication 8, **caractérisé en ce que** l'au moins une plaque de support (18) est réalisée à partir d'une matière amagnétique ou d'une combinaison de matières amagnétiques.

10. Système formant rotor selon l'une des revendications 8 ou 9, **caractérisé en ce que** un élément de compensation élastique (17) est prévu entre au moins une extrémité de l'au moins un élément magnétique (5) et la plaque de support (18) et/ou entre la plaque de support (18) et la partie d'arbre opposée (12, 13).

11. Machine électrique (1) comprenant un système formant rotor selon l'une des revendications précédentes, la machine électrique (1) comportant une première et une deuxième roue à aubes (8, 9) qui sont disposées à l'opposé de la partie d'arbre respective (12, 13) sur la barre de liaison (20) qui s'étend à travers la première et la deuxième partie d'arbre (12, 13), un disque intermédiaire supplémentaire étant de préférence prévu entre au moins une roue à aubes et sa partie d'arbre associée.

12. Machine électrique (1) selon la revendication 11, **ca-**

**ractérisée en ce que** la machine électrique (1) est une machine à grande vitesse, notamment une turbine et/ou un compresseur.

13. Procédé de réalisation d'un système formant rotor (4) destiné à une machine électrique (1) selon l'une des revendications 1 à 10, le procédé comportant les étapes suivantes :

fournir une barre de liaison (20),
fournir un arbre en deux parties (6) pourvu d'une première partie d'arbre (12) et d'une deuxième partie d'arbre (13), l'une des parties d'arbre (13) comportant un logement d'élément magnétique (16) destiné à recevoir l'au moins un élément magnétique (5) et un logement de partie d'arbre (36) destiné à recevoir au moins une portion de l'autre partie d'arbre opposée (12) ;
insérer l'au moins un élément magnétique (5) dans le logement d'élément magnétique (16) et insérer la portion de l'autre partie d'arbre opposée (12) dans le logement de partie d'arbre (36), et
introduire la barre de liaison (20) à travers les deux parties d'arbre (12, 13) avant, pendant ou après avoir inséré l'élément magnétique (5) dans le logement d'élément magnétique (16) d'une partie d'arbre (13),
serrer les deux parties d'arbre (12, 13) et l'élément magnétique (5) disposé entre celles-ci dans la direction axiale,
un axe de symétrie de l'élément magnétique (5) étant disposé sur l'axe de rotation (21) de l'arbre (6),
l'élément magnétique (5) comportant une extrémité pointue ou émoussée saillant vers l'extérieur, le logement d'élément magnétique (16) étant conçu de manière correspondante sous la forme d'un creux conique le long de l'axe de rotation (21).

14. Procédé selon la revendication 13, **caractérisé en ce qu'**une plaque de support (18) est disposée entre au moins une partie d'arbre (12, 13) et l'extrémité opposée de l'au moins un élément magnétique (5) pour former un logement axial destiné à l'au moins un élément magnétique (5).

Fig. 1

Fig. 2

# Fig. 3a

5

# Fig. 3b

5

# Fig. 4a

5

5

# Fig. 4b

5

α

5

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4433261 A

- WO 14080087 A1